# EUROPÄISCHE PATENTSCHRIFT

(11) **EP 1 279 588 B1**
(45) Veröffentlichungstag und Bekanntmachung des Hinweises auf die Patenterteilung: **05.10.2005**
(21) Anmeldenummer: 02011699.2
(22) Anmeldetag: 04.06.2002
(51) Int. Cl.: B62K 11/02

(54) **Motorradrahmen**
Motorcycle frame
Cadre de motocyclette

(30) Priorität: 24.07.2001 DE 10135931
(43) Veröffentlichungstag der Anmeldung: 29.01.2003
(73) Patentinhaber: Bayerische Motoren Werke Aktiengesellschaft, 80809 München (DE)
(72) Erfinder: Neugebauer, Dietmar, 85304 Ilmmünster (DE); Mölleken, Ralf, 80807 München (DE)

(56) Entgegenhaltungen:
- EP-A- 1 205 644
- US-A- 3 945 463
- US-A- 5 012 883
- US-A- 5 031 580
- US-A- 5 966 933
- US-A- 5 975 230
- US-B1- 6 253 868

## Beschreibung

Die vorliegende Erfindung betrifft einen Motorradrahmen gemäß dem Oberbegriff des Patentanspruches 1.

Ein derartiger Motorradrahmen ist aus der US 5 975 230 bekannt.

Aus der DE 690 067 69 T2 ist ein dreieckförmiger Motorradrahmen bekannt, mit einem Lenkkopflagerrohr, in dem schwenkbar die Gabel gelagert ist und mit dem zentral bzw. mittig ein oberes Hauptrohr und ein unteres Hauptrohr verbunden sind. Das obere Hauptrohr und das untere Hauptrohr sind durch ein schräg nach unten verlaufendes Überbrückungsrohr miteinander verbunden. Ein derartiger Motorradrahmen, bei dem die Rahmenrohre in der Mittellängsebene des Motorrads liegen, wird als "Zentralrahmen" bezeichnet. Das obere Hauptrohr, das untere Hauptrohr und das Überbrückungsrohr bilden ein geschlossenes Fluidsystem, das als Motorölreservoir verwendet wird und an das ein Motorölzufluss und ein Motorölabfluss angeschlossen sind.

Für Motorradmotoren mit Trockensumpfschmierung wird ein Ölreservoir benötigt, das entweder wie oben erläutert als Zusatzvolumen in der Rahmenkonstruktion enthalten ist oder das durch einen separaten Ölbehälter gebildet ist. Bei den hohen Leistungsdaten moderner Motorradmotoren wird ein möglichst stabiles, verwindungssteifes Fahrwerk gefordert. Zentralrahmen sind hierzu nur bedingt geeignet, da sie eine relativ geringe Torsionssteifigkeit aufweisen.

Aufgabe der Erfindung ist es, einen Motorradrahmen mit integriertem Motorölreservoir und einer verbesserten Steifigkeit und Motorölströmung zu schaffen.

Diese Aufgabe wird durch die Merkmale des Patentanspruchs 1 gelöst, wobei in den Längsträgerrohren des Brückenrahmens sogenannte Schwallschutzelemente angeordnet sind. Die Schwallschutzelemente haben die Funktion eines Rückschlagventils. Sie sollen eine Motorölströmung vom oberen bzw. vorderen Querrohr zum unteren bzw. hinteren Querrohr ermöglichen und eine umgekehrte Motoröl-strömung, z. B. bei starkem Abbremsen des Motorrads, verhindern, um auch bei starken Fahrzeugverzögerungen eine zuverlässige Versorgung des Motors durch zurückhalten des Motoröls sicherzustellen. Vorteilhafte Ausgestaltungen und Weiterbildungen der Erfindung sind den Unteransprüchen zu entnehmen.

Das Grundprinzip der Erfindung besteht in der Verwendung eines "Brückenrahmens", in den das Motorölreservoir integriert ist. Ein Brückenrahmen weist zwei in einem Abstand voneinander und im wesentlichen symmetrisch zur Mittellängsebene des Motorrads angeordnete Längsrohre auf, deren eines Ende jeweils mit dem Lenkkopflagerrohr verbunden ist und die im Bereich zwischen dem Lenkkopflagerlagerrohr und ihrem anderen Ende durch ein vorderes lenkkopflagernahes Querrohr und ein hinteres Querrohr miteinander verbunden sind. Gemäß der Erfindung bilden die Längsträgerrohre und die Querrohre ein geschlossenes Fluidsystem, das als Motorölreservoir verwendet wird.

Der Brückenrahmen verläuft vom Lenkkopflagerrohr schräg nach hinten in Richtung Motorradmitte zum Getriebe hinab. Im Bereich zwischen den beiden Längsträgerrohren und den Querrohren sind der Motor und der Kühler des Motorrades angeordnet. Bei einem Brückenrahmen dient der Motor als "mittragendes" Element. Brückenrahmenkonstruktionen sind so ausgelegt, dass sie eine möglichst hohe Steifigkeit und ein geringes Gewicht haben, wobei die Rahmenquerschnitte groß und die Wandstärken des Rahmens gering sind. Das geschlossene Rahmenprofil eines Brückenrahmens umschließt somit ein relativ großes Hohlvolumen, das als Motorölreservoir bzw. als Öltank genutzt wird.

Nach einer Weiterbildung der Erfindung ist für die Ölbefüllung im Bereich des Lenkkopflagers ein Einfüllstutzen an einem der beiden Längsträgerrohre bzw. Seitenprofile vorgesehen. Der Einfüllstutzen ist im wesentlichen senkrecht angeordnet und schließt mit dem schräg nach hinten unten abfallenden Längsträgerrohr einen überstumpfen Winkel ein. An der Öffnung des Einfüllstutzens ist ein Verschluß mit daran befestigtem Ölmessstab angeordnet, der biegsam ist, sodass er sich beim Einführen in den Einfüllstutzen bzw. das zugeordnete Längsträgerrohr entsprechend der Innenraumkontur des Motorölreservoirs bzw. des Längsträgerrohres anpassen kann. Somit ist eine Ölbefüllung und eine Ölstandskontrolle über eine einzige "Öffnung" möglich.

Das Motorölreservoir des Brückenrahmens ist über einen zum Motor führenden Motorölzulauf und einen vom Motor kommenden Motorölrücklauf an den Motorölkreislauf angeschlossen. Der Zulauf zum Motor ist am hinteren bzw. unteren Querrohr des Brückenrahmens angeordnet. Zwischen einem am unteren Querrohr angeordneten Zulaufstutzen und dem Motor ist ein Ölfilter bzw. Ölsieb vorgesehen, das Rückstände bzw. Verunreinigungen aus dem Öl herausfiltert und verhindert, dass diese in den Motorölkreislauf gelangen. Am oberen Querrohr ist ein Rücklaufstutzen angeordnet, der ein Rückfördern des Motoröls in die beiden Rahmenprofile bzw. Längsträgerrohre ermöglicht. Aufgrund der im Vergleich zu einem Zentralrahmen relativ großen Rahmenoberfläche ist zusätzlich eine verbesserte Wärmeabfuhr gewährleistet.

Die Schwallschutzelemente sind vorzugsweise aus Kunststoff hergestellt und werden bevor die einzelnen Rahmenrohre z.B. durch Pressschweißen miteinander verbunden werden, in die Längsträgerrohre eingepresst.

Die Schwallschutzelemente weisen jeweils ein Rahmen- bzw. Halteelement auf, das in unverformtem Zustand ein gewisses Übermaß gegenüber den Innenabmessungen der Längsträgerrohre aufweist und somit in eingepresstem Zustand abdichtet. Am Rahmen- bzw. Halteelement ist ein klappenartiges Element angeordnet, das als "Rückschlagklappe" fungiert und das in Richtung zum hinteren Querrohr schwenkbar ist. Das klappenartige Element kann beispielsweise ein am Rahmen des Schwallschutzelementes einseitig befestigter "Kunststofflappen" sein. Durch die Schwallschutzelemente ist damit auch bei starken Bremsungen, insbesondere bei einer Vollbremsung, eine sichere Ölversorgung des Motors gewährleistet.

Nach einer Weiterbildung der Erfindung sind an den einander abgewandten Außenseiten der Längsträgerrohre Wärme- bzw. Berührschutzelemente angeordnet. Diese "Blenden" sind zur Abschirmung der Fahrerbeine vorgesehen und verhindern eine zu hohe Wärmebeaufschlagung des Fahrers.

Im folgenden wird die Erfindung anhand eines Ausführungsbeispiels im Zusammenhang mit der Zeichnung näher erläutert. Es zeigen:
- Figur 1: einen Brückenrahmen von vorne rechts;
- Figur 2: den Brückenrahmen der Figur 1 von hinten links;
- Figur 3: einen Querschnitt eines Schwallschutzelementes;
- Figur 4: den Rahmen eines Schwallschutzelements in perspektivischer Darstellung;
- Figur 5: ein Klappenelement eines Schwallschutzelements in Seitenansicht und
- Figur 6: das Klappenelement der Figur 5 in perspektivischer Darstellung.

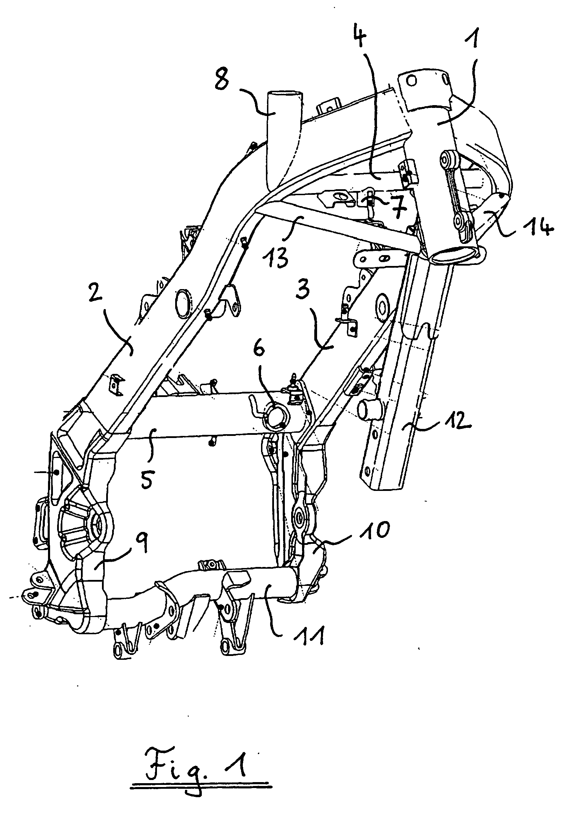

Figur 1 zeigt einen Motorradrahmen, der als sogenannter "Brückenrahmen" bezeichnet wird. Von einem Lenkkopflagerrohr 1 aus erstrecken sich im wesentlichen symmetrisch zur Mittellängsebene des Motorrads zwei Längsträgerrohre schräg nach hinten unten, nämlich ein rechtes Längsträgerrohr 2 und ein linkes Längsträgerrohr 3. Die beiden Längsträgerrohre 2 und 3 sind im Bereich des Lenkkopflagerrohres 1 durch ein vorderes bzw. oberes Querrohr 4 miteinander verbunden. Im Bereich ihres hinteren Endes sind die beiden Längsträgerrohre 2 und 3 durch ein hinteres bzw. unteres Querrohr 5 miteinander verbunden. Am unteren Querrohr 5 ist ein Zuflussstutzen 6 vorgesehen, über den Motoröl aus dem Brückenrahmen zum Motor (nicht dargestellt) gelangt. Zwischen dem Zuflussstutzen 6 und dem Motorölkreislauf ist ein Filter bzw. Sieb (nicht dargestellt) angeordnet, das Verunreinigungen vom Motor abhält. Ferner ist am oberen Querrohr 4 ein Rücklaufstutzen 7 vorgesehen, über den das Motoröl vom Motor zurück in den Brückenrahmen strömt.

Die beiden Längsträgerrohre 2 und 3 sowie die beiden Querrohre 4 und 5 bilden ein geschlossenes Motorölreservoir, das als Öltank verwendet wird.

Im Bereich des Lenkkopflagerohres 1 ist am rechten Längsträgerrohr 2 ein Einfüllstutzen 8 vorgesehen, über den Öl in den Brückenrahmen eingefüllt werden kann. In den Einfüllstutzen 8 kann ein hier nicht dargestellter Ölmessstab eingeschraubt bzw. eingesteckt werden. Der Ölmessstab weist vorzugsweise einen flexiblen Schaft auf, der sich beim Einführen in den Einfüllstutzen 8 entsprechend der Innenkontur des Lenkträgerrohres 2 verbiegen kann. Über den Einfüllstutzen 8 ist sowohl ein Einfüllen von Öl als auch ein Ölstandskontrolle möglich.

Die beiden Längsträgerrohre 2 und 3 sind im Bereich des unteren Querrohres 5 mit einem unteren Rahmenteil 9, 10, 11 verbunden, an dem die Hinterradschwinge (nicht dargestellt) gelagert ist. Der untere Rahmenteil 9 - 11 bildet jedoch kein Motorölreservoir, insbesondere steht er nicht in Fluidverbindung mit den Längsträgerrohren 2 und 3 bzw. den Querträgerrohren 4 und 5.

Der Vollständigkeit halber wird auch noch auf ein Zentralrohr 12 hingewiesen, das mit dem unteren Bereich des Lenkkopflagerrohres 1 und über Streben 13, 14 mit den Längsträgerrohren 2 bzw. 3 verbunden ist. Das Zentralrohr 12 und die Streben 13, 14 sind hier ebenfalls nicht Bestandteil des Motorölreservoirs, das heißt sie stehen nicht in Fluidverbindung mit den Längsträgerrohren 2, 3 und den Querrohren 4, 5.

Das durch die Längsträgerrohre 2 und 3 und die Querrohre 4 und 5 gebildete Motorölreservoir des Brückenrahmens kann während des Betriebs durch das darin enthaltene Motoröl relativ heiß werden. An den Außenseiten der Längsträgerrohre 2 und 3, insbesondere an der hier im Bildvordergrund dargestellten "rechten" Außenseite des Längsträgerrohres 2 und der hier verdeckten linken Außenseite des Längsträgerrohres 3 können daher Wärme- bzw. Berührschutzblenden angeordnet sein, welche die Beine des Fahrers von den heißen Längsträgerrohren 2, 3 abschirmen. Die Berührschutzblenden (nicht dargestellt) dienen als Wärmeschutz.

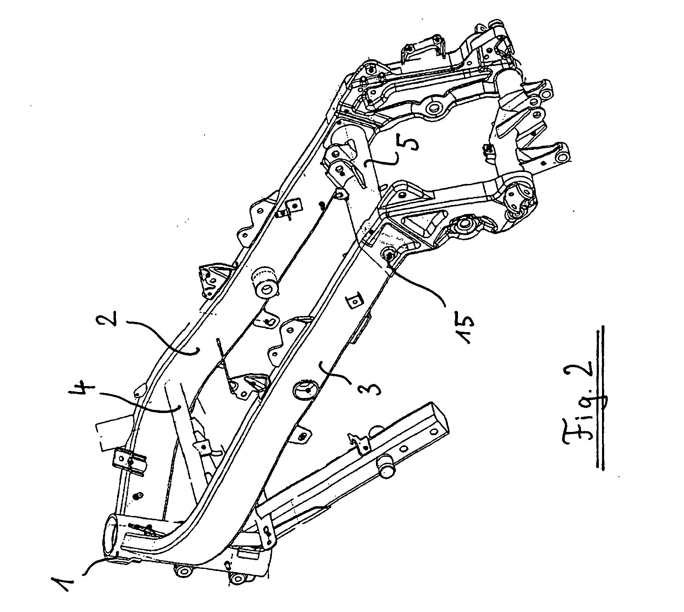

Figur 2 zeigt den Brückenrahmen der Figur 1 von hinten links gesehen. In dieser Ansicht ist eine an der linken Außenseite des Längsträgerrohres 3 angeordnete Ölablassschraube 15 zu erkennen, über die bei einem Ölwechsel eine Entleerung des in den Längsträgerrohren 2, 3 und den Querrohren 4, 5 enthaltenen Motoröls möglich ist.

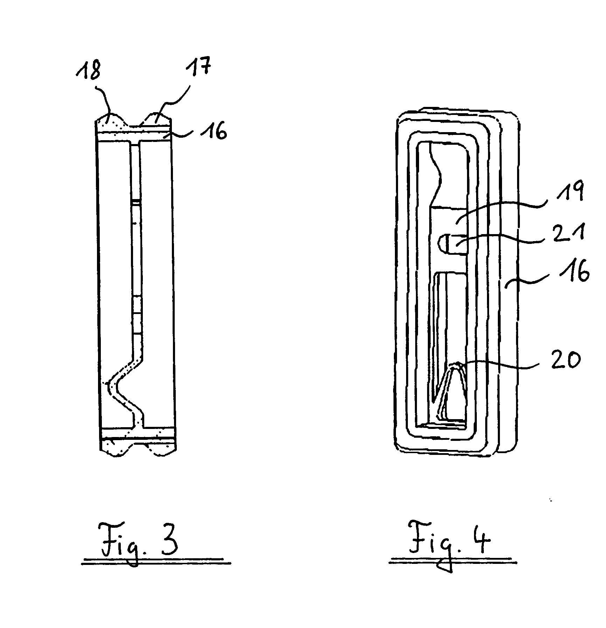

Im Inneren der Längsträgerrohre 2 und 3, im Bereich zwischen dem oberen bzw. vorderen Querrohr und dem unteren bzw. hinteren Querrohr 5 sind sogenannte Schwallschutzelemente (hier nicht dargestellt) angeordnet, die im Zusammenhang mit den Figuren 3 - 6 noch näher erläutert werden. Die Schwallschutzelemente haben primär den Zweck, eine "Rückströmung" von Motoröl in den Längsträgerrohren 2, 3 in Richtung vom unteren Querrohr 5 zum oberen Querrohr 4 zu verhindern und eine Ölströmung in den Längsträgerrohren 2, 3 in Richtung vom oberen Querrohr 4 um unteren Querrohr 5 zu ermöglichen.

Insbesondere bei starken Bremsungen besteht nämlich die Gefahr, dass Motoröl infolge von Trägheitskräften in den Längsträgerrohren 2, 3 nach vorne bzw. oben fließt und die Versorgung des Motors mit Motoröl kurzzeitig unterbrochen wird, was zu Motorschäden führen kann. Eine derartige Unterbrechung der Ölversorgung kann durch die Schwallschutzelemente zuverlässig verhindert werden. Sie fungieren nämlich als "Rückschlagventile", die in Richtung zum Motor hin offen und in umgekehrter Richtung geschlossen sind.

Die Figuren 3 - 6 zeigen den konstruktiven Aufbau der Schwallschutzelemente.

Wie aus den Figuren 3 und 4 ersichtlich besteht ein Schwallschutzelement aus einem Rahmenelement 16, an dessen Außenumfang elastische umlaufende Dichtlippen 17, 18 angeordnet sind. Die Dichtlippen 17, 18 weisen in ihrem hier dargestellten undeformierten Zustand ein gewisses Übermaß gegenüber den Innenabmessungen der Längsträgerrohre 2, 3 auf. Vor dem Zusammenschweißen des Brückenrahmens werden die Schwallschutzelemente in die Längsträgerohre 2, 3 eingepresst, wobei sich die Dichtlippen 17, 18 verformen und eine Abdichtung gegenüber der Innenkontur der Längsträgerrohre 2, 3 sicherstellen. Das Rahmenelement 16 kann beispielsweise ein Kunststoffspritzgusverbundsteil sein.

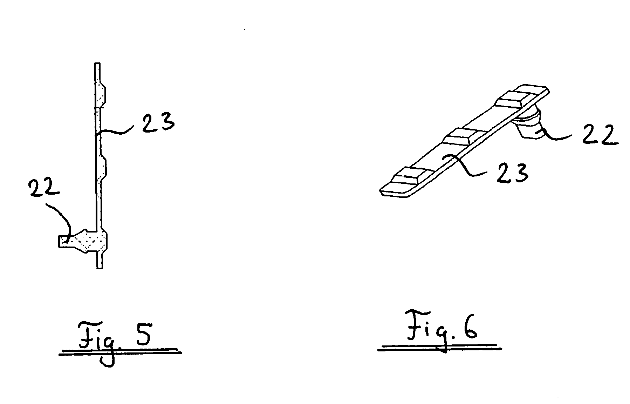

Im Rahmeninneren des Rahmenelements 16 sind Halte- bzw. Stützelemente 19, 20 angeordnet. Im Bereich des Halteelements 19 ist eine Ausnehmung 21 vorgesehen, in die ein "Fixierungsnoppen" 22 (Figuren 5, 6) eines elastischen klappenartigen Elements 23 eingesteckt wird. In zusammengebautem Zustand ist also das in den Figuren 5, 6 dargestellte klappenartige Element 23 in den Rahmen 16 des Schwallschutzelements eingesetzt. Aufgrund seiner Biegeelastizität fungiert das klappenartige Element 23 als Rückschlagklappe.

Das Schwallschutzelement ist so in den Brückenrahmen eingepresst, dass die klappenartigen Elemente 23 der Schwallschutzelemente bezüglich der Haltenoppe 22 in Richtung zum unteren Querrohr 5 "schwenken" können. Dies ermöglicht einen Motorölstrom zum Motor hin, das heißt zum Querrohr 5 hin. Bei einer "Rückstromneigung" hingegen liegt das klappenartige Element 23 an den Halte- bzw. Stützelementen 19, 20 des Rahmens 16 an und verhindert somit einen Rückfluss von Motoröl in den Längsträgerrohren 2, 3 zum oberen Querrohr 4 hin.

## Patentansprüche

1. Motorradrahmen, mit zwei Längsträgerrohren, deren eines Ende jeweils mit einem Lenkkopflagerrohr verbunden ist, wobei zumindest ein Rahmenteil ein Motorölreservoir bildet, und der Motorradrahmen (2 - 5) ein Brückenrahmen ist, dessen Längsträgerrohre (2, 3) im wesentlichen symmetrisch bezüglich einer Mittellängsebene des Motorradrahmens (2-5) angeordnet sind und die im Bereich zwischen dem Lenkkopflagerrohr (1) und ihrem anderen Ende durch ein vorderes lenkkopflagernahes Querrohr (4) und durch ein hinteres Querrohr (5) miteinander verbunden sind, wobei die Längsträgerrohre (2, 3) und die Querrohre (4, 5) in Fluidverbindung miteinander stehen und das Motorölreservoir bilden, **dadurch gekennzeichnet, dass** in den Längsträgerrohren (2, 3) jeweils ein Schwallschutzelement (16, 23) angeordnet ist, die eine Ölströmung vom oberen Querrohr (4) zum unteren Querrohr (5) gestatten und die bei einer Ölströmung in entgegengesetzter Richtung vom unteren Querrohr (5) zum oberen Querrohr (4) geschlossen sind.

2. Motorradrahmen nach Anspruch 1, **dadurch gekennzeichnet, dass** die Schwallschutzelemente (16, 23) aus Kunststoff sind.

3. Motorradrahmen nach Anspruch 2, **dadurch gekennzeichnet, dass** die Schwallschutzelemente (16, 23) in die zugeordneten Längsträgerrohre (2, 3) eingepresst sind.

4. Motorradrahmen nach einem der Ansprüche 2 oder 3, **dadurch gekennzeichnet, dass** die Schwallschutzelemente (16, 23) durch ein Rahmenelement (16) und ein am Rahmenelement (16) angeordnetes Klappenelement (23) gebildet sind, wobei das Klappenelement (23) als Rückschlagklappe fungiert und in Richtung zum unteren Querrohr schwenkbar ist.

5. Motorradrahmen nach Anspruch 4, **dadurch gekennzeichnet, dass** das Klappenelement (23) ein elastischer Kunststofflappen ist, der mit einem seiner beiden Enden am Rahmenelement (16) befestigt ist.

6. Motorradrahmen nach einem der Ansprüche 1 bis 5, **dadurch gekennzeichnet, dass** das Rahmenelement (16) an seinem Außenumfang elastische Dichtlippen aufweist, die sich in eingepresstem Zustand der Innenkontur der Längsträgerrohre (2, 3) anpassen.

7. Motorradrahmen nach einem der Ansprüche 1 bis 6, **dadurch gekennzeichnet, dass** an einander abgewandten Außenseiten der Längsträgerrohre (2, 3) Wärme- bzw. Berührschutzelemente angeordnet sind, zum Verhindern einer Berührung der Längsträgerrohre (2, 3) durch die Fahrerbeine.

8. Motorradrahmen nach einem der Ansprüche 1 bis 7, **dadurch gekennzeichnet, dass** an dem hinteren Querohr (5) ein Ölabflussstutzen (6) vorgesehen ist, für eine Versorgung eines Motors mit Motoröl aus dem Brückenrahmen.

9. Motorradrahmen nach Anspruch 8, **dadurch gekennzeichnet, dass** der Ölabflussstutzen (6) über einen Ölfilter bzw. ein Ölsieb mit einem Ölansauganschluss eines Motors verbunden ist.

10. Motorradrahmen nach einem der Ansprüche 1 bis 9, **dadurch gekennzeichnet, dass** am vorderen Querrohr (4) ein Ölrückflussstutzen (7) vorgesehen ist, für einen Rückfluss von Motoröl vom Motor in den Brückenrahmen.

11. Motorradrahmen nach einem der Ansprüche 1 bis 10, **dadurch gekennzeichnet, dass** ein Öleinfüllstutzen (8) an einem der Längsträgerrohre (2, 3) im Bereich zwischen dem Lenkkopflagerrohr (1) und den vorderen Querrohr (4) vorgesehen ist.

12. Motorradrahmen nach Anspruch 11, **dadurch gekennzeichnet, dass** in dem Öleinfüllstutzen (8) ein Ölmessstab angeordnet ist, der einen flexiblen Schaft aufweist.

13. Motorradrahmen nach einem der Ansprüche 1 bis 12, **dadurch gekennzeichnet, dass** an einer Außenseite eines der Längsträgerrohre (2, 3) im Bereich des hinteren Querrohrs (5) eine Ölablassöffnung (15) vorgesehen ist.

## Claims

1. A motorcycle frame comprising two longitudinal bearer tubes, one end of each being connected to a steering head bearing tube, wherein at least one frame part forms an engine oil reservoir, and the motorcycle frame (2 - 5) is a bridge-type frame with longitudinal bearer tubes (2, 3) which are disposed substantially symmetrically relative to a central longitudinal plane of the motorcycle frame (2 - 5) and are connected in the region between the steering head bearing tube (1) and their other end by a front transverse tube (4) near the steering head bearing and by a rear transverse tube (5), wherein the longitudinal bearer tubes (2, 3) and the transverse tubes (4, 5) are connected together for conveying liquid and form the engine oil reservoir, **characterised in that** a backflow-preventing element (16, 23) is disposed in each longitudinal bearer tube (2, 3) and allows a flow of oil from the top transverse tube (4) to the bottom transverse tube (5) but closes if oil flows in the opposite direction from the bottom transverse tube (5) to the top transverse tube (4).

2. A motorcycle frame according to claim 1, **characterised in that** the backflow-preventing elements (16, 23) are of a plastics material.

3. A motorcycle frame according to claim 2, **characterised in that** the backflow-preventing elements (16, 23) are pressed into the associated longitudinal bearer tubes (2, 3).

4. A motorcycle frame according to claim 2 or 3, **characterised in that** the backflow-preventing elements (16, 23) comprise a frame element (16) and a flap element (23) disposed on the frame element (16) wherein the flap element (23) serves as a non-return valve and is pivotable in the direction towards the bottom transverse tube.

5. A motorcycle frame according to claim 4, **characterised in that** the flap element (23) is an elastic plastics material flap with one of its two ends fastened to the frame element (16).

6. A motorcycle frame according to any of claims 1 to 5, **characterised in that** on its outer periphery the frame element (16) has elastic sealing lips which in the pressed-in state adapt to the inner contour of the longitudinal bearer tubes (2, 3).

7. A motorcycle frame according to any of claims 1 to 6, **characterised in that** heat-insulating or contact-preventing elements are disposed on the facing-apart outer sides of the longitudinal bearer tubes (2, 3) and prevent contact between the longitudinal bearer tubes (2, 3) and the driver's legs.

8. A motorcycle frame according to any of claims 1 to 7, **characterised in that** an oil outlet nozzle (6) is provided on the rear transverse tube (5) for supplying the engine with oil from the bridge-type frame.

9. A motorcycle frame according to claim 8, **characterised in that** the oil outlet nozzle (6) is connected by an oil filter or strainer to an oil intake connection of an engine.

10. A motorcycle frame according to any of claims 1 to 9, **characterised in that** an oil return nozzle (7) is provided on the front transverse tube (4) for a retum flow of oil from the engine into the bridge-type frame.

11. A motorcycle frame according to any of claims 1 to 10, **characterised in that** an oil filler nozzle (8) is provided on one of the longitudinal bearer tubes (2, 3) in the region between the steering head bearing tube (1) and the front transverse tube (4).

12. A motorcycle frame according to claim 11, **characterised in that** an oil measuring stick with a flexible shank is disposed in the oil filler nozzle (8).

13. A motorcycle frame according to any of claims 1 to 12, **characterised in that** an oil discharge opening (15) is provided on an outer side of one of the longitudinal bearer tubes (2, 3) in the neighbourhood of the rear transverse tube (5).

## Revendications

1. Cadre de motocyclette comportant deux tubes porteurs longitudinaux reliés chacun par une extrémité à un tube de palier de tête de direction, dont au moins une partie formant réservoir d'huile, ce cadre (2-5) étant un cadre-pont dont les tubes porteurs longitudinaux (2, 3) sont essentiellement symétriques par rapport au plan longitudinal médian du cadre de motocyclette (2-5) et sont reliés dans la zone située entre le tube de palier de tête de la direction (1) et leurs autres extrémités, par un tube transversal avant (4) proche du palier de tête de la direction, et par un tube transversal arrière (5), les tubes (2, 3) et les tubes (4, 5) étant en liaison fluide et formant le réservoir d'huile de moteur,
**caractérisé en ce que**
dans chacun des tubes porteurs longitudinaux (2, 3), est monté un élément antijet (16, 23) qui permet à l'huile de s'écouler du tube transversal supérieur (4) au tube transversal inférieur (5), mais qui se ferme quand l'huile tend à s'écouler dans le sens opposé, du tube transversal arrière (5) au tube transversal avant (4).

2. Cadre de motocyclette selon la revendication 1,
**caractérisé en ce que**
les éléments antijets (16, 23) sont en matière plastique.

3. Cadre de motocyclette selon la revendication 2,
**caractérisé en ce que**
les éléments antijets (16, 23) sont comprimés dans les tubes porteurs longitudinaux (2, 3) associés.

4. Cadre de motocyclette selon la revendication 2 ou 3,
**caractérisé en ce que**
les éléments antijets (16, 23) sont constitués d'un élément de cadre (16) et d'un élément de clapet (23) monté sur celui-ci et qui fonctionne comme clapet antiretour en pouvant basculer en direction du tube transversal inférieur.

5. Cadre de motocyclette selon la revendication 4,
**caractérisé en ce que**
l'élément de clapet (23) est une languette élastique en matière plastique fixée par une de ses extrémités à l'élément de cadre (16).

6. Cadre de motocyclette selon une des revendications 1 à 5,
**caractérisé en ce que**
l'élément de cadre (16) porte sur sa périphérie des lèvres d'étanchéité élastiques qui, à l'état comprimé, s'ajustent sur le contour interne des tubes porteurs longitudinaux (2, 3).

7. Cadre de motocyclette selon une des revendications 1 à 6,
**caractérisé en ce que**
sur les faces externes éloignées l'une de l'autre des tubes porteurs longitudinaux (2, 3) sont montés des éléments de protection contre la chaleur et contre le contact, pour empêcher le contact entre les tubes porteurs longitudinaux (2, 3) et les jambes du conducteur.

8. Cadre de motocyclette selon une des revendications 1 à 7,
**caractérisé en ce que**
sur le tube transversal arrière (5) est prévue une tubulure d'écoulement d'huile (6) pour alimenter un moteur en huile provenant du cadre-pont.

9. Cadre de motocyclette selon la revendication 8,
**caractérisé en ce que**
la tubulure d'écoulement d'huile (6) est reliée par un filtre à huile ou un crible à un raccord d'aspiration d'huile d'un moteur.

10. Cadre de motocyclette selon une des revendications 1 à 9,
**caractérisé en ce qu'**
il est prévu sur le tube transversal avant (4) une tubulure de reflux d'huile (7) permettant à l'huile de refluer du moteur dans le cadre-pont.

11. Cadre de motocyclette selon une des revendications 1 à 10,
**caractérisé en ce que**
la tubulure de remplissage d'huile (8) est prévue sur un des tubes porteurs longitudinaux (2, 3) dans la zone située entre le tube de palier de tête de la direction (1) et le tube transversal avant (4).

12. Cadre de motocyclette selon la revendication 11,
**caractérisé en ce que**
dans la tubulure de remplissage d'huile (8) est montée une jauge de niveau d'huile, qui présente une tige flexible.

13. Cadre de motocyclette selon une des revendications 1 à 12,
**caractérisé en ce que**
sur la face externe d'un des tubes porteurs longitudinaux (2, 3) est prévue une ouverture de vidange d'huile située dans la zone du tube transversal arrière (5).
